# EUROPEAN PATENT APPLICATION

(11) **EP 4 775 439 A1**
(43) Date of publication of application: **15.07.2026**
(21) Application number: 24883630.6
(22) Date of filing: 19.12.2024
(51) Int. Cl.: B60L 53/62, H02J 7/34

(54) **INTEGRATED STORAGE AND CHARGING APPARATUS, CHARGING CONTROL METHOD, CHARGING PILE, AND CHARGING SYSTEM**

(30) Priority: 18.11.2024 CN 202411650040
(71) Applicant: Contemporary Amperex Technology Co., Limited, Ningde, Fujian 352100 (CN)
(72) Inventor: WU, Kai, Ningde, Fujian 352100 (CN); XU, Jinmei, Ningde, Fujian 352100 (CN); ZHENG, Zhimin, Ningde, Fujian 352100 (CN); CHENG, Yong, Ningde, Fujian 352100 (CN)
(74) Representative: Gong, Jinping
(86) International application number: PCT/CN2024/140556
(87) International publication number: WO 2026/102858

(57) **Abstract**

This disclosure discloses a storage and charging integrated apparatus, a charging control method, a charging pile, and a charging system. The storage and charging integrated apparatus includes an energy storage module, a direct-current conversion module, and a charging module; where an input terminal of the direct-current conversion module is configured to receive a first charging power input from an external source; a first output terminal of the direct-current conversion module is connected to a first terminal of the charging module, a second output terminal of the direct-current conversion module is connected to a first terminal of the energy storage module, and a second terminal of the charging module is connected to a second terminal of the energy storage module; and the charging module is connected in series with the direct-current conversion module and the energy storage module, and is configured to output or receive electric energy to or from a to-be-charged device. In this way, the storage and charging integrated apparatus can achieve voltage adaptation with various devices to be charged, which expands the scope of application of the storage and charging integrated apparatus and improves the charging efficiency.

## Description

### CROSS-REFERENCE TO RELATED APPLICATIONS

This disclosure is based on Chinese patent application No. 202411650040.0, filed on November 18, 2024, with the title "STORAGE AND CHARGING INTEGRATED APPARATUS, CHARGING CONTROL METHOD, CHARGING PILE, AND CHARGING SYSTEM", and claims the priority of this Chinese patent application, which is incorporated herein by reference in its entirety.

### TECHNICAL FIELD

This disclosure relates to the field of charging technologies, and in particular to a storage and charging integrated apparatus, a charging control method, a charging pile, and a charging system.

### BACKGROUND

At present, with the rapid growth of the new energy vehicle market, the construction of charging infrastructure is particularly important. Among many charging solutions, the storage and charging integrated apparatus, which integrates energy storage systems and charging functions, has become the first choice for many charging stations.

The storage and charging integrated apparatus can charge new energy vehicles through internal energy storage batteries. However, the output voltage of the energy storage batteries is constant, and the output voltage is difficult to adapt to the charging voltage of various new energy vehicles, which reduces charging efficiency.

### SUMMARY

This disclosure mainly provides a storage and charging integrated apparatus, a charging control method, a charging pile, and a charging system, which can enable the storage and charging integrated apparatus to achieve voltage adaptation with various devices to be charged, thereby expanding the scope of application of the storage and charging integrated apparatus and improving the charging efficiency.

The technical solution of this disclosure is achieved as follows.

According to a first aspect, an embodiment of this disclosure provides a storage and charging integrated apparatus, where the storage and charging integrated apparatus includes an energy storage module, a direct-current conversion module, and a charging module; where
an input terminal of the direct-current conversion module is configured to receive a first charging power input from an external source;
a first output terminal of the direct-current conversion module is connected to a first terminal of the charging module, a second output terminal of the direct-current conversion module is connected to a first terminal of the energy storage module, and a second terminal of the charging module is connected to a second terminal of the energy storage module; and
the charging module is connected in series with the direct-current conversion module and the energy storage module and is configured to output or receive electric energy to or from a to-be-charged device.

Through the foregoing technical means, the direct-current conversion module converts the first charging power input from the external source and, based on the structure of which the charging module, the energy storage module, and the direct-current conversion module connected in series, outputs or receives electric energy to or from the to-be-charged device. In this way, as the charging power output by the direct-current conversion module adjusts the charging power provided by the energy storage module, the charging power output by the charging module has a wider range than the first charging power, and has higher flexibility than the charging power output by the energy storage module, which achieves voltage adaptation with various devices to be charged, and thus expands the application range of the storage and charging integrated apparatus.

In some embodiments, a positive electrode terminal of the energy storage module is connected to a negative electrode terminal of the direct-current conversion module, and a negative electrode terminal of the energy storage module is connected to a negative electrode terminal of the charging module; or a negative electrode terminal of the energy storage module is connected to a positive electrode terminal of the direct-current conversion module, and a positive electrode terminal of the energy storage module is connected to a positive electrode terminal of the charging module.

Through the foregoing technical means, the energy storage module may be arranged on the positive electrode side of the direct-current conversion module, or may be arranged on the negative electrode side of the direct-current conversion module. In this way, the flexibility of module arrangement in the storage and charging integrated apparatus can be improved.

In some embodiments, the storage and charging integrated apparatus further includes an AC-DC conversion module; where an input terminal of the AC-DC conversion module is connected to an alternating-current power grid; the first terminal of the energy storage module is connected to a first output terminal of the AC-DC conversion module, a first input terminal of the direct-current conversion module, and the second output terminal of the direct-current conversion module, and the second terminal of the energy storage module is connected to a second output terminal of the AC-DC conversion module and a second input terminal of the direct-current conversion module; and the AC-DC conversion module is configured to provide the first charging power to the direct-current conversion module.

Through the foregoing technical means, the energy storage module is connected to both the AC-DC conversion module and the direct-current conversion module. In this way, the direct-current conversion module can output voltage bidirectionally to the energy storage module, so as to adjust the output power of the charging module, which expands the voltage adaptation range of the storage and charging integrated apparatus for the to-be-charged device.

In some embodiments, the storage and charging integrated apparatus further includes a first switch module and a second switch module; where the first switch module includes a first switch and a second switch, and the second switch module includes a third switch, a fourth switch, and a fifth switch; and the first switch is connected in series between the second input terminal of the direct-current conversion module and the second terminal of the energy storage module, the second switch is connected in series between the first input terminal of the direct-current conversion module and the first terminal of the energy storage module, the third switch is connected in series between the first output terminal of the direct-current conversion module and a first input terminal of the charging module, the fourth switch is connected in series between the second terminal of the energy storage module and a second input terminal of the charging module, and the fifth switch is connected in series between the second output terminal of the direct-current conversion module and the first terminal of the energy storage module.

Through the foregoing technical means, by controlling the on and off states of various switches in the first switch module and the second switch module, based on a working state of the direct-current conversion module, it is possible to control whether to charge the to-be-charged device together with the energy storage module, control whether the storage and charging integrated apparatus charges the to-be-charged device, and control whether the alternating-current power grid charges the energy storage module. In this way, not only is the power application range of the to-be-charged device broadened, but also the switches can be turned off when charging is not needed, reducing energy waste.

In some embodiments, the storage and charging integrated apparatus further includes a third switch module, where the third switch module includes a sixth switch; and one terminal of the sixth switch is connected to the first output terminal of the AC-DC conversion module, and another terminal of the sixth switch is connected to one terminal of the third switch.

Through the foregoing technical means, by controlling the on or off states of various switches in the third switch module, it is possible to control the storage and charging integrated apparatus to charge the to-be-charged device, or to implement a vehicle-to-grid (Vehicle-to-Grid, V2G) function from the to-be-charged device to the alternating-current power grid. In this way, charging can be performed according to actual situations of the storage and charging integrated apparatus and the to-be-charged device, improving charging flexibility.

In some embodiments, the energy storage module includes at least one energy storage unit; where the at least one energy storage unit is connected in series and/or in parallel between the first terminal of the energy storage module and the second terminal of the energy storage module to provide a third charging power.

Through the foregoing technical means, the energy storage module includes a plurality of energy storage units connected in series and/or in parallel. In this way, due to the modularity of the energy storage units, the energy storage units can be freely added or reduced, which facilitates the rapid connection and disconnection of the energy storage units, and improves the charging flexibility of the storage and charging integrated apparatus.

In some embodiments, each of the energy storage unit includes an energy storage battery, and each of the energy storage unit is configured to provide a fifth charging power based on electric energy of the energy storage battery; where the fifth charging power is less than or equal to the third charging power.

Through the foregoing technical means, each of the energy storage unit includes at least one energy storage battery. In this way, the output power of the storage and charging integrated apparatus can be controlled to meet the charging needs of different devices to be charged.

In some embodiments, at least some of the at least one energy storage unit each include a fourth switch module, where the fourth switch module is connected in series between the first terminal of the corresponding energy storage unit and the second output terminal of the AC-DC conversion module.

Through the foregoing technical means, based on the control of the switch state of the fourth switch module, the number of energy storage units connected in series in the storage and charging integrated apparatus is controlled. In this way, the number of energy storage units connected can be flexibly determined according to the charging power needs of the to-be-charged device, which improves charging flexibility and expands the range of charging power output by the storage and charging integrated apparatus.

In some embodiments, the storage and charging integrated apparatus further includes a control module; where the control module is connected to the first switch module, the second switch module, the third switch module, and the fourth switch module, and the control module is configured to send drive signals to the first switch module, the second switch module, the third switch module, and the fourth switch module; where the drive signals are used to control on and off states of the first switch module, the second switch module, the third switch module, and the fourth switch module.

Through the foregoing technical means, the control module controls the on or off states of various switch modules, which enables the storage and charging integrated apparatus to implement different functions. In this way, the convenience and safety of controlling the storage and charging integrated apparatus are improved.

In some embodiments, the storage and charging integrated apparatus further includes a communication module; where the communication module is connected to the control module; the control module is configured to obtain a status parameter of the storage and charging integrated apparatus and send the status parameter to the communication module; and the communication module is configured to receive the status parameter of the storage and charging integrated apparatus and forward the status parameter to a cloud platform.

Through the foregoing technical means, the communication module feeds back the status parameter collected by the control module to the cloud platform. In this way, operational data of the storage and charging integrated apparatus can be saved in a timely manner, and an operation status of the storage and charging integrated apparatus can be learned, which improves the operational reliability of the storage and charging integrated apparatus.

In some embodiments, the AC-DC conversion module is a bidirectional AC-DC module, and the direct-current conversion module is a bidirectional DC-DC module.

Through the foregoing technical means, the AC-DC conversion module is a bidirectional AC-DC module, and the direct-current conversion module is a bidirectional DC-DC module. In this way, bidirectional electric energy exchange between the storage and charging integrated apparatus and the alternating-current power grid is implemented. The storage and charging integrated apparatus can not only charge the to-be-charged device but also feed back electric energy to the power grid, which helps to shave peaks and fill valleys of the power grid, and improves the stability of the power grid and energy utilization.

In some embodiments, a voltage difference between a first voltage value of the to-be-charged device and a second voltage value of the energy storage module is less than or equal to a first preset value.

Through the foregoing technical means, the voltage difference between the first voltage value of the to-be-charged device and the second voltage value of the energy storage module is less than or equal to a first preset value. In this way, high-power output to the to-be-charged device can be implemented, the size of the storage and charging integrated apparatus is reduced, and the charging flexibility is improved.

According to a second aspect, an embodiment of this disclosure provides a charging control method, where a storage and charging integrated apparatus includes an energy storage module, a direct-current conversion module, and a charging module; and the method includes:
receiving, by the direct-current conversion module, a first charging power input from an external source, and outputting a third charging power through the energy storage module;
determining a working state of the direct-current conversion module based on a first voltage value of a to-be-charged device and a second voltage value of the energy storage module, and converting the first charging power to a second charging power based on the working state; where the working state includes a positive polarity working state and a negative polarity working state; and
providing the second charging power and the third charging power to the charging module for charging output, and providing a fourth charging power output by the charging module to the to-be-charged device for charging.

Through the foregoing technical means, the direct-current conversion module converts the first charging power input from an external source and outputs the second charging power based on its working state. Furthermore, the charging module further performs charging output for the second charging power and the third charging power provided by the energy storage module, and the charging module provides the fourth charging power to the to-be-charged device for charging. In this way, as the second charging power output by the direct-current conversion module adjusts the third charging power provided by the energy storage module, the fourth charging power output by the charging module has a wider range than the second charging power, and has higher flexibility than the third charging power output by the energy storage module, which achieves voltage adaptation with various devices to be charged, and thus expands the application range of the storage and charging integrated apparatus.

In some embodiments, the storage and charging integrated apparatus further includes a first switch module; and the method further includes: when the first switch module is in an on state, the direct-current conversion module works in the negative polarity working state, and the second charging power provided by the direct-current conversion module is fed back to the energy storage module, enabling the charging module to charge the to-be-charged device based on the third charging power provided by the energy storage module; or when the first switch module is in an off state and the direct-current conversion module works in the positive polarity working state, enabling the charging module to charge the to-be-charged device based on the second charging power provided by the direct-current conversion module and the third charging power provided by the energy storage module.

Through the foregoing technical means, by controlling the on or off state of the first switch module to match the working state of the direct-current conversion module, the second charging power provided by the direct-current conversion module and the third charging power provided by the energy storage module are superimposed or offset through the charging module to charge the to-be-charged device, which broadens the application range of the to-be-charged device.

In some embodiments, the storage and charging integrated apparatus further includes a second switch module; and the method further includes: when the first switch module is in an on state and the second switch module is in an off state, charging the energy storage module based on the first charging power provided by the AC-DC conversion module, or feeding back electric energy to an alternating-current power grid based on output power of the energy storage module.

Through the foregoing technical means, when the second switch module is on, the energy storage module feeds back electric energy to the alternating-current power grid, or the alternating-current power grid charges the energy storage module through the AC-DC conversion module. In this way, electric energy balance between the energy storage module and the alternating-current power grid can be achieved, which can shave peaks and fill valleys of the alternating-current power grid, thereby improving energy utilization efficiency.

In some embodiments, the first switch module includes a first switch and a second switch, and the second switch module includes a third switch, a fourth switch, and a fifth switch; and the method further includes: when the first switch, the second switch, the third switch, the fourth switch, and the fifth switch are all in an on state, the direct-current conversion module works in the negative polarity working state, and the second charging power provided by the direct-current conversion module is fed back to the energy storage module, enabling the charging module to charge the to-be-charged device based on the third charging power provided by the energy storage module; or when the third switch, the fourth switch, and the fifth switch are all in an on state, the first switch and the second switch are both in an off state, and the direct-current conversion module works in the positive polarity working state, enabling the charging module to charge the to-be-charged device based on the second charging power provided by the direct-current conversion module and the third charging power provided by the energy storage module; or when the third switch, the fourth switch, and the fifth switch are all in an off state, the first switch and the second switch are both in an on state, charging the energy storage module based on the first charging power provided by the AC-DC conversion module, or feeding back electric energy to the alternating-current power grid based on the output power of the energy storage module.

Through the foregoing technical means, by controlling the on and off states of various switches in the first switch module and the second switch module, based on a working state of the direct-current conversion module, it is possible to control whether to charge the to-be-charged device together with the energy storage module, control whether the storage and charging integrated apparatus charges the to-be-charged device, and control whether the alternating-current power grid charges the energy storage module. In this way, not only is the power application range of the to-be-charged device broadened, but also the switches can be turned off when charging is not needed, reducing energy waste.

In some embodiments, the storage and charging integrated apparatus further includes a third switch module, where the third switch module includes a sixth switch; and the method further includes: when the first switch, the third switch, the fourth switch, and the sixth switch are all in an on state and the second switch and the fifth switch are both in an off state, enabling the charging module to charge the to-be-charged device based on the first charging power provided by the AC-DC conversion module, or feeding back electric energy to the alternating-current power grid based on output power of the to-be-charged device.

Through the foregoing technical means, by controlling the on or off states of various switches in the third switch module, it is possible to control the storage and charging integrated apparatus to charge the to-be-charged device, or to implement a V2G function from the to-be-charged device to the alternating-current power grid. In this way, charging can be performed according to actual situations of the storage and charging integrated apparatus and the to-be-charged device, improving charging flexibility.

In some embodiments, the energy storage module includes at least one energy storage unit, and at least some of the at least one energy storage unit each include a fourth switch module; and the method further includes: when the fourth switch module is in an on state, connecting at least one energy storage unit in series in a charging circuit in which the second switch is located to provide the third charging power.

Through the foregoing technical means, the energy storage module includes a plurality of energy storage units connected in series and/or in parallel. In this way, due to the modularity of the energy storage units, the energy storage units can be freely added or reduced, which facilitates the rapid connection and disconnection of the energy storage units, and improves the flexibility of the fourth charging power output by the storage and charging integrated apparatus.

According to a third aspect, an embodiment of this disclosure provides a charging pile, where the charging pile includes the storage and charging integrated apparatus according to any one of the first aspect.

Through the foregoing technical means, the storage and charging integrated apparatus in the charging pile can output, based on the lower power provided by the alternating-current power grid, a relatively high third charging power that meets the needs of supercharging/fast charging. Therefore, no additional transformer is required in the circuit, which reduces the cost of the storage and charging integrated apparatus and reduces the size of the storage and charging integrated apparatus. Moreover, without being restricted by any transformer access point, the storage and charging integrated apparatus can be connected at any position of the alternating-current power grid, which improves the flexibility of the charging pile, and facilitates the fast charging of the to-be-charged device.

According to a fourth aspect, an embodiment of this disclosure provides a charging system, where the charging system includes a to-be-charged device and the charging pile according to the third aspect.

Through the foregoing technical means, without the need for an additional transformer configured, the charging pile in the charging system can achieve high-power output to the to-be-charged device based on the low-power input from the alternating-current power grid, which reduces the cost and size of the charging system and increases the charging speed.

In some embodiments, the charging module includes a charging gun, where an output terminal of the charging gun is connected to the to-be-charged device; and the storage and charging integrated apparatus is configured to charge the to-be-charged device through the charging gun based on a second charging power provided by a direct-current conversion module and a third charging power provided by an energy storage module.

Through the foregoing technical means, the to-be-charged device is charged through the charging gun, which improves the stability of the charging process.

In some embodiments, the charging system further includes a cloud platform, where the cloud platform is connected to the storage and charging integrated apparatus; and the cloud platform is configured to receive a status parameter of the storage and charging integrated apparatus.

Through the foregoing technical means, the status parameter of the storage and charging integrated apparatus is received through the cloud platform, which facilitates real-time monitoring of the status of the storage and charging integrated apparatus and enables timely handling of abnormalities when they occur.

It should be understood that the foregoing general descriptions and the following detailed descriptions are merely illustrative and explanative, and do not constitute any limitation on the technical solutions of this application.

### BRIEF DESCRIPTION OF DRAWINGS

FIG. 1 is a first schematic structural diagram of a storage and charging integrated apparatus according to an embodiment of this disclosure;
FIG. 2 is a second schematic structural diagram of a storage and charging integrated apparatus according to an embodiment of this disclosure;
FIG. 3 is a third schematic structural diagram of a storage and charging integrated apparatus according to an embodiment of this disclosure;
FIG. 4 is a fourth schematic structural diagram of a storage and charging integrated apparatus according to an embodiment of this disclosure;
FIG. 5 is a fifth schematic structural diagram of a storage and charging integrated apparatus according to an embodiment of this disclosure;
FIG. 6 is a sixth schematic structural diagram of a storage and charging integrated apparatus according to an embodiment of this disclosure;
FIG. 7 is a schematic diagram of a composition structure of an energy storage unit according to an embodiment of this disclosure;
FIG. 8 is a schematic flowchart of a charging control method according to an embodiment of this disclosure;
FIG. 9 is a schematic diagram of a composition structure of a charging pile according to an embodiment of this disclosure;
FIG. 10 is a first schematic diagram of a composition structure of a charging system according to an embodiment of this disclosure;
FIG. 11 is a second schematic diagram of a composition structure of a charging system according to an embodiment of this disclosure; and
FIG. 12 is a third schematic diagram of a composition structure of a charging system according to an embodiment of this disclosure.

### DESCRIPTION OF EMBODIMENTS

To provide a more detailed understanding of the features and technical content of the embodiments of this disclosure, the implementation of the embodiments of this disclosure is described in detail below in conjunction with the accompanying drawings, which are provided for illustrative purposes only and are not intended to limit the embodiments of this disclosure.

Unless otherwise defined, all technical and scientific terms used herein shall have the same meanings as commonly understood by those skilled in the art to which this disclosure pertains. The terms used in this specification are merely intended to describe the embodiments of this disclosure, but not intended to constitute any limitation on this disclosure.

In the following description, the term "some embodiments" describes a subset of all possible embodiments, but it should be understood that "some embodiments" may be the same or different subsets of all possible embodiments and may be combined with each other without conflict.

It should also be noted that the terms "first\second\third" involved in the embodiments of this disclosure are used only to distinguish similar objects and do not represent a specific order for the objects. It can be understood that "first\second\third" may be interchanged in a specific order or sequence where permitted, so that the embodiments of this disclosure described herein can be implemented in an order other than that illustrated or described herein.

As mentioned herein, "embodiment" means that specific features, structures, or characteristics described with reference to an embodiment can be included in at least one embodiment of this disclosure. The word "embodiment" appearing in various places in this specification does not necessarily refer to the same embodiment or an independent or alternative embodiment that is exclusive of other embodiments. Persons skilled in the art explicitly and implicitly understand that the embodiments described herein may be combined with other embodiments.

The relevant technologies related to this disclosure are introduced below.

The application of new energy batteries in life and industry is becoming increasingly widespread. For example, new energy vehicles equipped with batteries have been widely used, and batteries are also increasingly being used in the field of energy storage and other fields.

At present, the application of new energy batteries in life and industry is becoming increasingly widespread. New energy batteries have been widely used in energy storage power supply systems such as hydroelectric power plants, thermal power plants, wind power plants, and solar power plants, as well as in many other fields including electric transportation tools such as electric bicycles, electric motorcycles, and electric vehicles, and aerospace. With the continuous expansion of application fields of traction batteries, market demands for traction batteries are also increasing.

In the embodiments of this disclosure, the battery may be a battery cell. The battery cell is a basic unit capable of converting chemical energy and electrical energy into each other, and may be used to make battery modules or battery packs to supply power to electrical devices. The battery cell may be a secondary battery, and the secondary battery is a battery cell of which an active material can be reactivated by charging after discharge to continue to be used. The battery cell may be a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, a lead storage battery, or the like. This is not limited in the embodiments of this disclosure.

In the embodiments of this disclosure, the battery may alternatively be a single physical module that includes one or more battery cells to provide higher voltage and capacity. When the battery cell is provided in plurality, the plurality of battery cells are connected in series, parallel, or series-parallel through bus-bar.

A storage and charging integrated machine is a device that integrates energy storage systems and charging functions. It can store the electric energy of the power grid through energy storage batteries inside during periods of low electricity consumption and provide charging service for new energy vehicles through the energy storage batteries during peak electricity consumption periods, thereby effectively alleviating the load on the power grid, optimizing the utilization of power resources, reducing electricity costs, and playing a role in shaving peaks and filling valleys.

Although the storage and charging integrated machine can provide emergency power, the voltage output by the energy storage batteries in the storage and charging integrated machine when charging new energy vehicles is relatively constant, while the voltage required by various new energy vehicles during charging is not uniform. Therefore, the voltage output by the storage and charging integrated machine may not match the voltage required by the new energy vehicles, resulting in charging failure.

Based on this, the embodiments of this disclosure provide a storage and charging integrated apparatus, a charging control method, a charging pile, and a charging system. A direct-current conversion module converts a first charging power input from an external source and, based on a structure of which a charging module, an energy storage module, and a direct-current conversion module are connected in series, outputs or receives electric energy to or from a to-be-charged device. In this way, as the charging power output by the direct-current conversion module adjusts the charging power provided by the energy storage module, the charging power output by the charging module has a wider range than the first charging power, and has higher flexibility than the charging power output by the energy storage module, which achieves voltage adaptation with various devices to be charged, and thus expands the application range of the storage and charging integrated apparatus.

The following provides a further detailed description of this disclosure through the accompanying drawings and specific embodiments.

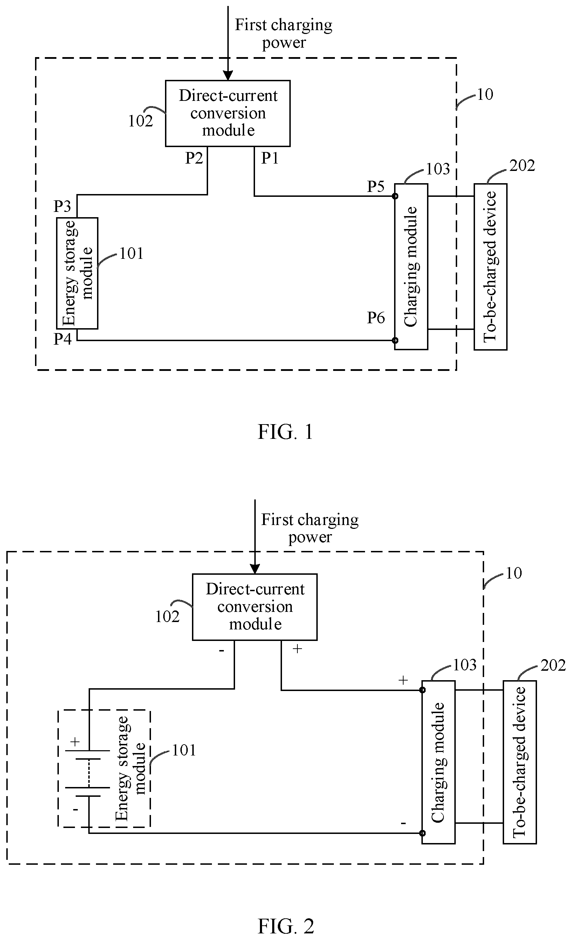

In an embodiment of this disclosure, FIG. 1 is a first schematic diagram of a composition structure of a storage and charging integrated apparatus according to an embodiment of this disclosure. As shown in FIG. 1, the storage and charging integrated apparatus 10 includes an energy storage module 101, a direct-current conversion module 102, and a charging module 103.

An input terminal of the direct-current conversion module 102 is configured to receive a first charging power input from an external source;
a first output terminal of the direct-current conversion module 102 is connected to a first terminal of the charging module 103, a second output terminal of the direct-current conversion module 102 is connected to a first terminal of the energy storage module 101, and a second terminal of the charging module 103 is connected to a second terminal of the energy storage module; and
the charging module 103 is connected in series with the direct-current conversion module 102 and the energy storage module 101, and is configured to output or receive electric energy to or from a to-be-charged device.

In this embodiment of this disclosure, the first output terminal P1 of the direct-current conversion module 102, the second output terminal P2 of the direct-current conversion module 102, the first terminal P3 of the energy storage module 101, the second terminal P4 of the energy storage module 101, a first input terminal P5 of the charging module 103, and a second input terminal P6 of the charging module 103 can be determined to be positive electrode terminals or negative electrode terminals according to the specific structure so as to achieve the series connection of the charging module 103, the direct-current conversion module 102, and the energy storage module 101.

In this embodiment of this disclosure, the direct-current conversion module 102 may be an isolated bidirectional DC-DC module. When a first terminal of the direct-current conversion module 102 is connected to the first terminal of the energy storage module 101, and a second terminal of the direct-current conversion module 102 is connected to the second terminal of the energy storage module 101, the direct-current conversion module 102 can achieve a direct-current positive and negative voltage output. To be specific, the direct-current conversion module 102 may adjust a direction of an output voltage in the first charging power received without changing a direction of the current, and output a positive or negative voltage. When the direct-current conversion module 102 outputs a positive voltage, to be specific, outputs a voltage to the first terminal of the energy storage module 101, the direct-current conversion module 102 works in a positive polarity mode; and when the direct-current conversion module 102 outputs a negative voltage, to be specific, outputs a voltage to the second terminal of the energy storage module 101, the direct-current conversion module 102 works in a negative polarity mode.

When a first voltage value of the to-be-charged device 202 is greater than or equal to a second voltage value of the energy storage module 101, a working state of the direct-current conversion module 102 is a positive polarity state, and the output second charging power is positive; and when the first voltage value of the to-be-charged device 202 is less than the second voltage value of the energy storage module 101, the working state of the direct-current conversion module 102 is a negative polarity state, and the output second charging power is negative.

In this embodiment of this disclosure, -Ua≤U1-U2≤+Ub, where U1 is a battery voltage of the to-be-charged device 202, that is, the first voltage value output by the charging module 103, U2 is the second voltage value output by the energy storage module 101, -Ua is the limit value of a negative voltage output by the direct-current conversion module 102, and +Ub is the limit value of a positive voltage output by the direct-current conversion module 102.

It should be noted that when U1-U2≥0 V, to be specific, when the first voltage value of the to-be-charged device 202 is greater than or equal to the second voltage value of the energy storage module 101, in other words, when a total voltage of a charging circuit is less than the first voltage value of the to-be-charged device 202, the voltage of the charging circuit needs to be raised based on energy conservation. At this point, the direct-current conversion module 102 works in a positive polarity mode, and outputs a positive voltage, to be specific, the second charging power is positive; and the direct-current conversion module 102 is connected in series with the energy storage module 101, and provides a sum of a third charging power output by the energy storage module 101 and the second charging power output by the direct-current conversion module 102, that is, a fourth charging power, to the charging module 103 to enable the charging module 103 to charge the to-be-charged device 202.

It should also be noted that when U1-U2<0 V, to be specific, when the first voltage value of the to-be-charged device 202 is less than the second voltage value of the energy storage module 101, in other words, when a total voltage of the charging circuit is greater than the first voltage value of the to-be-charged device 202, the voltage of the charging circuit needs to be lowered based on energy conservation. At this point, the direct-current conversion module 102 works in a negative polarity mode, and the direct-current conversion module 102 outputs a negative voltage, to be specific, the negative power is fed back to the energy storage module 101 through a bus connected between the direct-current conversion module 102 and the energy storage module 101, which reduces the output voltage of the energy storage module 101, where a voltage reduction amplitude is a value of the negative voltage output by the direct-current conversion module 102. In this way, the direct-current conversion module 102 works in a negative polarity mode and provides a negative second charging power to the energy storage module 101, which reduces the output power of the energy storage module 101; and the energy storage module 101 provides a charging power after the second charging power is offset, as the fourth charging power, to the charging module 103 to enable the charging module 103 to charge the to-be-charged device 202.

In this embodiment of this disclosure, it should be understood that as the charging process progresses, the second voltage value output by the energy storage module 101 and the first voltage value output by the to-be-charged device 202 may change. Therefore, a voltage detection module may be provided on the energy storage module 101 and the to-be-charged device 202 to detect voltage changes in real-time, and based on comparison results of the first voltage value and the second voltage value, adjust the second charging power output by the direct-current conversion module 102 and control whether the direct-current conversion module 102 works in a positive polarity mode or a negative polarity mode.

In the storage and charging integrated apparatus provided in this embodiment of this disclosure, the direct-current conversion module converts the first charging power input from an external source and, based on a structure of which the charging module, the energy storage module, and the direct-current conversion module are connected in series, outputs or receives electric energy to or from the to-be-charged device. In this way, as the charging power output by the direct-current conversion module adjusts the charging power provided by the energy storage module, the charging power output by the charging module has a wider range than the first charging power, and has higher flexibility than the charging power output by the energy storage module, which achieves voltage adaptation with various devices to be charged, and thus expands the application range of the storage and charging integrated apparatus.

In some embodiments, FIG. 2 is a second schematic diagram of the composition structure of the storage and charging integrated apparatus according to an embodiment of this disclosure. As shown in FIG. 2, a positive electrode terminal of the energy storage module 101 is connected to a negative electrode terminal of the direct-current conversion module 102, and a negative electrode terminal of the energy storage module 101 is connected to a negative electrode terminal of the charging module 103.

In this embodiment of this disclosure, the first output terminal P1 of the direct-current conversion module 102 may be a positive electrode output terminal, and the second output terminal P2 of the direct-current conversion module 102 may be a negative electrode output terminal. A first terminal P3 of the energy storage module 101 may be a positive electrode terminal, a second terminal P4 of the energy storage module 101 may be a negative electrode terminal, a first input terminal P5 of the charging module 103 may be a positive electrode input terminal, and a second input terminal P6 of the charging module 103 may be a negative electrode input terminal. It should be understood that whether various terminals in various module are the positive electrode terminals or negative electrode terminals is determined according to the specific device case. In this disclosure and the following embodiments, the description is based on the embodiment shown in FIG. 2.

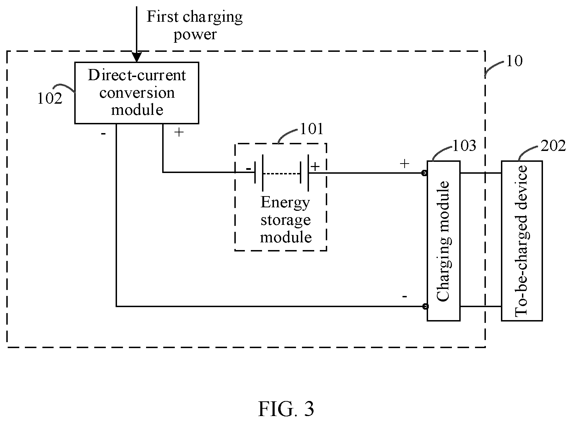

Alternatively, in some embodiments, FIG. 3 is a third schematic diagram of the composition structure of the storage and charging integrated apparatus according to an embodiment of this disclosure. As shown in FIG. 3, a negative electrode terminal of the energy storage module 101 is connected to a positive electrode terminal of the direct-current conversion module 102, and a positive electrode terminal of the energy storage module 101 is connected to a positive electrode terminal of the charging module 103.

In this embodiment of this disclosure, the first output terminal P1 of the direct-current conversion module 102 may be a negative electrode output terminal, and the second output terminal P2 of the direct-current conversion module 102 may be a positive electrode output terminal. A first terminal P3 of the energy storage module 101 may be a negative electrode terminal, and a second terminal P4 of the energy storage module 101 may be a positive electrode terminal. A first input terminal P5 of the charging module 103 may be a negative electrode input terminal, and a second input terminal P6 of the charging module 103 may be a positive electrode input terminal.

In the storage and charging integrated apparatus provided in this embodiment of this disclosure, the energy storage module may be arranged on a positive electrode side of the direct-current conversion module or on a negative electrode side of the direct-current conversion module. In this way, the flexibility of module arrangement in the storage and charging integrated apparatus can be improved.

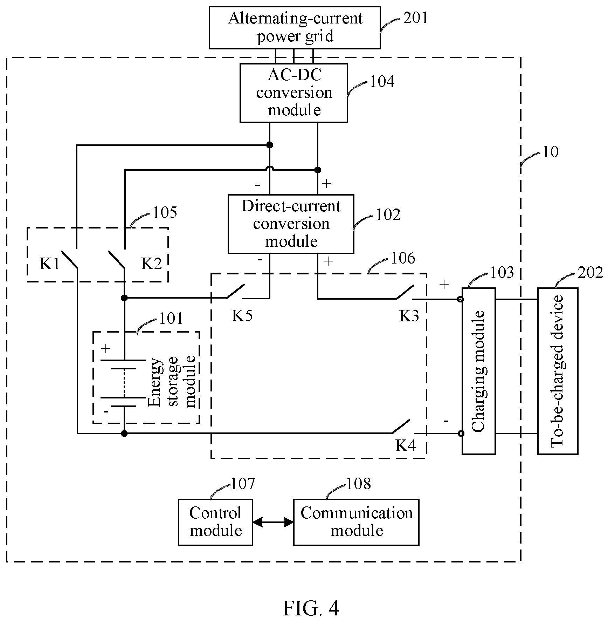

In another embodiment of this disclosure, FIG. 4 is a fourth schematic diagram of the composition structure of the storage and charging integrated apparatus according to an embodiment of this disclosure. As shown in FIG. 4, the storage and charging integrated apparatus 10 further includes an AC-DC conversion module 104.

An input terminal of the AC-DC conversion module 104 is connected to an alternating-current power grid 201.

The first terminal of the energy storage module 101 is connected to a first output terminal of the AC-DC conversion module 104, the first input terminal of the direct-current conversion module 102, and the second output terminal of the direct-current conversion module 102, and the second terminal of the energy storage module 101 is connected to a second output terminal of the AC-DC conversion module 104 and the second input terminal of the direct-current conversion module 102.

The AC-DC conversion module 104 is configured to provide the first charging power to the direct-current conversion module.

In this embodiment of this disclosure, the energy storage module 101 may be a battery capable of storing electric energy in the storage and charging integrated apparatus 10, for example, a lithium iron phosphate battery or a lithium-ion battery. The energy storage module 101 may store the electric energy of the alternating-current power grid 201 or renewable energy, for example, electric energy output or converted by photovoltaic power generation equipment. The battery capacity and type of the energy storage module 101 are not limited herein, but generally, output power U1 of the energy storage module 101, that is, the third charging power, is generally greater than 210 kW.

It should be noted that the alternating-current power grid 201 may be a three-phase alternating-current power grid, with input power of generally less than or equal to 150 kW. In this embodiment of this disclosure, the alternating-current power grid 201 is connected to the AC-DC conversion module 104 to output an alternating-current voltage and an alternating current to the AC-DC conversion module 104. Those skilled in the art can understand that the alternating-current power grid 201 generally refers to a system that can provide power. In an example, the alternating-current power grid 201 may be a municipal power supply.

In this embodiment of this disclosure, the AC-DC conversion module 104 may be an isolated bidirectional alternating current/direct current (Alternating current/Direct current, AC/DC) converter, also known as a rectifier, which is a power conversion device capable of converting an alternating current to a direct current or a direct current to an alternating current. The AC-DC conversion module 104 may further be provided with an isolation chip to isolate the alternating-current power grid 201 from a subsequent charging module 103 and to-be-charged device 202, so as to prevent the alternating-current power grid 201 from damaging the storage and charging integrated apparatus 10 and the to-be-charged device 202. It should be understood that after the input power of the alternating-current power grid 201 is converted by the AC-DC conversion module 104, the output power of the alternating-current power grid 201, that is, the first charging power, should be less than or equal to 150 kW.

It should also be noted that the AC-DC conversion module 104 may be arranged in the integrated storage and charging integrated apparatus 10, or may be arranged outside the integrated storage and charging integrated apparatus 10, which is arranged depending on actual needs.

In the storage and charging integrated apparatus provided in this embodiment of this disclosure, the energy storage module is connected to both the AC-DC conversion module and the direct-current conversion module. In this way, the direct-current conversion module can output voltage bidirectionally to the energy storage module, so as to adjust the output power of the charging module, which expands the voltage adaptation range of the storage and charging integrated apparatus for the to-be-charged device.

In some embodiments, still referring to FIG. 4, the storage and charging integrated apparatus 10 further includes a first switch module 105 and a second switch module 106, where the first switch module 105 includes a first switch K1 and a second switch K2, and the second switch module 106 includes a third switch K3, a fourth switch K4, and a fifth switch K5.

The first switch K1 is connected in series between the second input terminal of the direct-current conversion module 102 and the second terminal of the energy storage module 101, the second switch K2 is connected in series between the first input terminal of the direct-current conversion module 102 and the first terminal of the energy storage module 101, the third switch K3 is connected in series between the first output terminal of the direct-current conversion module 102 and a first input terminal of the charging module 103, the fourth switch K4 is connected in series between the second terminal of the energy storage module 101 and a second input terminal of the charging module 103, and the fifth switch K5 is connected in series between the second output terminal of the direct-current conversion module 102 and the first terminal of the energy storage module 101.

In this embodiment of this disclosure, when it is necessary to charge the to-be-charged device 202 through the storage and charging integrated apparatus 10, the first switch K1, the second switch K2, the third switch K3, the fourth switch K4, and the fifth switch K5 can be controlled to be turned on simultaneously, and based on the previous embodiments and according to the relation between the output voltage of the energy storage module 101 and the voltage of the to-be-charged device 202, the direct-current conversion module 102 is controlled to work in a positive polarity mode or a negative polarity mode. When the direct-current conversion module 102 works in a positive polarity mode, a sum of the second charging power and the third charging power is used as the fourth charging power to supply power to the to-be-charged device 202; or when the direct-current conversion module 102 works in a negative polarity mode, the third charging power after the negative second charging power is offset is used as the fourth charging power to supply power to the to-be-charged device 202. Alternatively, when the first switch K1, the second switch K2, the third switch K3, the fourth switch K4, and the fifth switch K5 are all turned off, power supply to the to-be-charged device 202 stops. When the direct-current conversion module 102 works in a positive polarity mode, the direct-current conversion module 102 performs positive work, where a direction of an output current and a direction of an output voltage are positive, and the positive direction means that the output terminal of the direct-current conversion module 103 outputs voltage to the charging module 103; or when the direct-current conversion module 102 works in a negative polarity mode, the direct-current conversion module 102 performs negative work, where a direction of an output current is still positive, a direction of an output voltage is negative, and the negative direction means that the direct-current conversion module 103 outputs voltage in a direction from a path in which the first switch and the second switch are located to the energy storage module 101.

In this embodiment of this disclosure, the first switch K1 and the second switch K2 are used to control on and off of a circuit between the direct-current conversion module 102 and the energy storage module 101. Based on the previous embodiments, the direct-current conversion module 102 may work in a positive polarity mode or a negative polarity mode based on the comparison between the output voltage of the energy storage module 101 and the voltage of the to-be-charged device 202. When the direct-current conversion module 102 works in a negative polarity mode, the first switch K1 and the second switch K2 may be controlled to be turned on, so that the direct-current conversion module 102 outputs a negative voltage to the energy storage module 101 through the circuit between the direct-current conversion module 102 and the energy storage module 101.

It should be noted that in some embodiments, when the storage and charging integrated apparatus 10 is powered on, the first switch K1 and the second switch K2 may be controlled to be always in an on state, regardless of the current working mode of the direct-current conversion module 102. In this way, the control logic can be simplified.

Alternatively, when there is no to-be-charged device 202 for charging, only the first switch K1 and the second switch K2 may be turned on, and the other switches in the first switch module are turned off, so that the alternating-current power grid 201 is controlled to charge the energy storage module 101. Alternatively, the energy storage module 101 is controlled to feed back electric energy to the alternating-current power grid 201.

In the storage and charging integrated apparatus provided in this embodiment of this disclosure, by controlling the on and off states of various switches in the first switch module and the second switch module, based on the working state of the direct-current conversion module, it is possible to control whether to charge the to-be-charged device together with the energy storage module, control whether the storage and charging integrated apparatus charges the to-be-charged device, and control whether the alternating-current power grid charges the energy storage module. In this way, not only is the power application range of the to-be-charged device broadened, but also the switches can be turned off when charging is not needed, reducing energy waste.

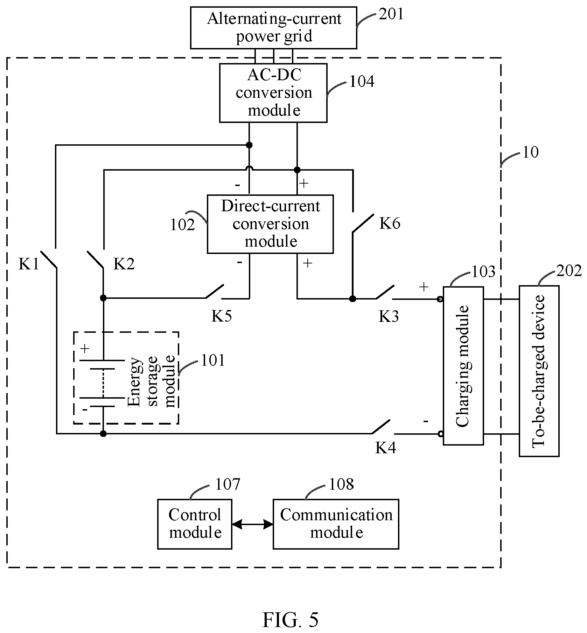

In some embodiments, FIG. 5 is a fifth schematic diagram of the composition structure of the storage and charging integrated apparatus according to an embodiment of this disclosure. As shown in FIG. 5, in some embodiments, the storage and charging integrated apparatus 10 further includes a third switch module, where the third switch module includes a sixth switch K6; one terminal of the sixth switch K6 is connected to the first output terminal of the AC-DC conversion module 104, and another terminal of the sixth switch K6 is connected to one terminal of the third switch K3.

In this embodiment of this disclosure, when the first switch K1, the third switch K3, the fourth switch K4, and the sixth switch K6 are all in an on state and the second switch K2 and the fifth switch K5 are both in an off state, the charging module 103 can charge the to-be-charged device 202 based on the first charging power provided by the AC-DC conversion module 104, or feed back electric energy to the alternating-current power grid 201 based on an output power of the to-be-charged device 202.

In this embodiment of this disclosure, the control module 107 may detect electric quantity of the energy storage module 101. If the electric quantity of the energy storage module 101 is insufficient, the first switch K1, the third switch K3, the fourth switch K4, and the sixth switch K6 may be controlled to be in an on state, only the alternating-current power grid 201 is enabled to charge the to-be-charged device 202, or the to-be-charged device 202 feeds back electric energy to the alternating-current power grid 201.

In the storage and charging integrated apparatus provided in this embodiment of this disclosure, by controlling the on or off states of various switches in the third switch module, it is possible to control whether the storage and charging integrated apparatus charges the to-be-charged device, or to implement a V2G function from the to-be-charged device to the alternating-current power grid. In this way, charging can be performed according to actual situations of the storage and charging integrated apparatus and the to-be-charged device, improving charging flexibility.

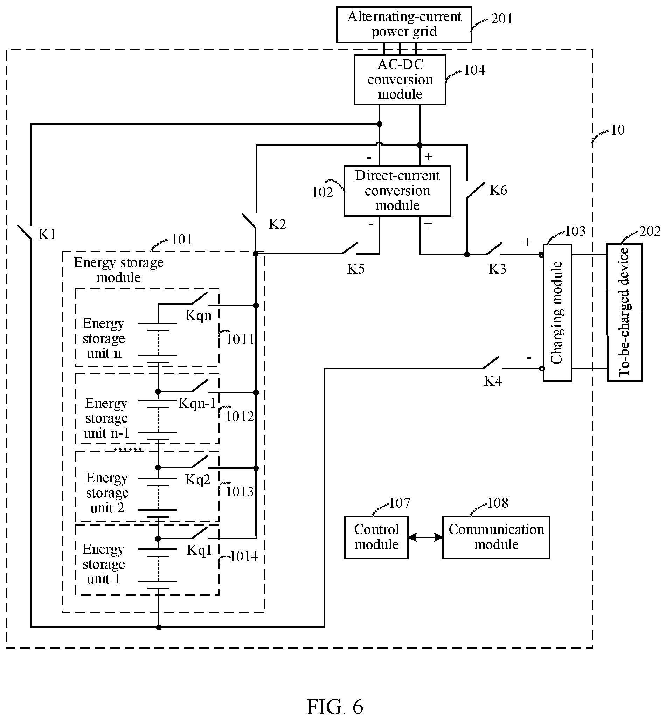

In another embodiment of this disclosure, FIG. 6 is a sixth schematic diagram of the composition structure of the storage and charging integrated apparatus according to an embodiment of this disclosure. As shown in FIG. 6, the energy storage module 101 includes at least one energy storage unit; where the at least one energy storage unit is connected in series and/or in parallel between the first terminal of the energy storage module 101 and the second terminal of the energy storage module 101 to provide a third charging power.

In this embodiment of this disclosure, the energy storage module 101 includes one or more energy storage units, namely energy storage unit 1 1014, energy storage unit 2 1013, ..., energy storage unit n-1 1012, and energy storage unit n 1011 (n is a positive integer), each of the energy storage units includes a positive electrode terminal and a negative electrode terminal, and the plurality of energy storage units are connected in series and/or in parallel to form the energy storage module 101, so that the energy storage module 101 provides the third charging power. In an example, the energy storage unit may be an electric box.

It should also be noted that the plurality of energy storage units in the energy storage module 101 may be connected in parallel, or may be connected in series, or may be connected in a combination of series and parallel, that is, in a series-parallel manner, which is not specifically limited herein. In this disclosure and the following embodiments, the description is based on the example of the plurality of energy storage units connected in series. In this way, when there are a plurality of energy storage units, the electric quantity of the energy storage module 101 is a sum of electric quantities of the plurality of energy storage units. This allows the energy storage module 101 to output high power to charge the to-be-charged device 202, while meeting high-power charging needs without adding a transformer or expanding the transformer capacity on the alternating-current power grid 201 side.

In this embodiment of this disclosure, the number of energy storage units may be selected and set based on actual needs. When the storage and charging integrated apparatus 10 is only used for low-power charging, the number of energy storage units may be set as one or a few to meet low-power charging scenarios; and when the storage and charging integrated apparatus 10 is applied to fast charging/supercharging scenarios, the number of energy storage units may be set in plurality.

In this embodiment of this disclosure, the number of energy storage units in the energy storage module 101 may be set according to actual needs, and the energy storage units may be freely added or reduced in series or parallel.

In the storage and charging integrated apparatus provided in this embodiment of this disclosure, the energy storage module includes a plurality of energy storage units connected in series and/or in parallel. In this way, due to the modularity of the energy storage units, the energy storage units can be freely added or reduced, which facilitates the rapid connection and disconnection of the energy storage units, and improves the flexibility of the fourth charging power output by the storage and charging integrated apparatus.

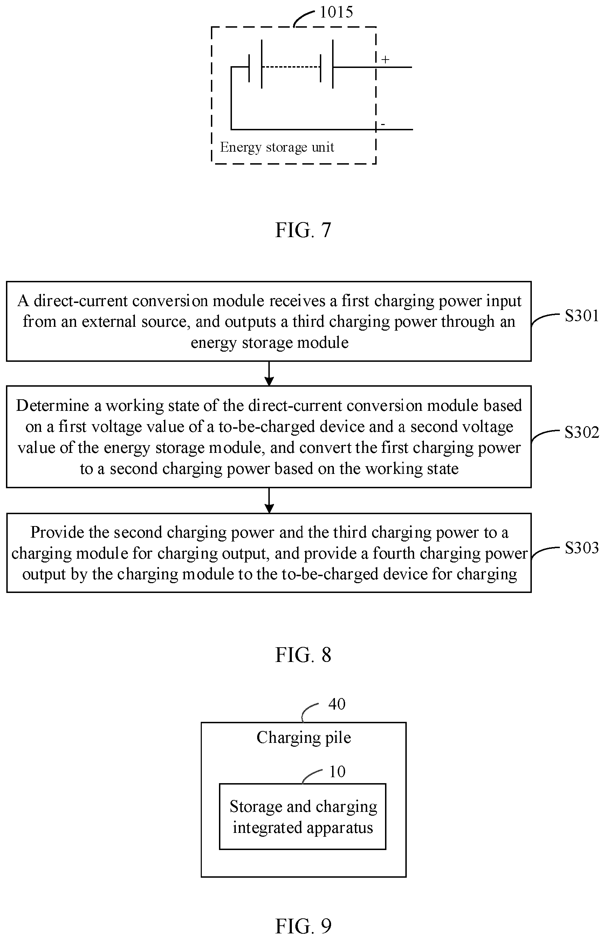

In some embodiments, FIG. 7 is a schematic diagram of a composition structure of an energy storage unit according to an embodiment of this disclosure. As shown in FIG. 7, each of the energy storage units includes an energy storage battery, and each of the energy storage units is configured to provide a fifth charging power based on electric energy of the energy storage battery; where the fifth charging power is less than or equal to the third charging power.

In this embodiment of this disclosure, the energy storage battery may be a single-cell battery, a multi-cell battery, a blade battery, a battery module, or the like, which is not specifically limited herein.

In this embodiment of this disclosure, the number of energy storage batteries in each energy storage unit may be equal or unequal, and may be specifically set according to actual needs. Each of the energy storage units may provide the fifth charging power based on the number of energy storage batteries it contains. It should be understood that the fifth charging power corresponding to different energy storage units may be the same or different.

It should be noted that each of the energy storage units provides the fifth charging power based on the electric energy of the energy storage battery. Furthermore, a plurality of energy storage units after being connected in series and/or in parallel provide the third charging power to the to-be-charged device 202. The number of energy storage units and the number of energy storage batteries in each energy storage unit are set to meet different charging needs of the to-be-charged device 202.

In the storage and charging integrated apparatus provided in this embodiment of this disclosure provide, each of the energy storage units includes at least one energy storage battery. In this way, the output power of the storage and charging integrated apparatus can be controlled to meet the charging needs of different devices to be charged.

In some embodiments, referring to FIG. 6, at least some of the at least one energy storage unit each include a fourth switch module, where the fourth switch module is connected in series between the first terminal of the corresponding energy storage unit and the second output terminal of the AC-DC conversion module.

In this embodiment of this disclosure, when the fourth switch module is in an on state, at least one energy storage unit in the charging circuit in which the second switch is located may be connected in series to provide the third charging power.

In this embodiment of this disclosure, the fourth switch module includes a plurality of switches, to be specific, one switch may be arranged on each of paths connecting the energy storage module 101 to the AC-DC conversion module 104 and the direct-current conversion module 102, to control the number of energy storage units connected to the charging circuit, so as to control the power output to the to-be-charged device 202.

If the energy storage unit is provided in one, and if the energy storage unit includes a switch, when this switch and the second switch K2 are turned on, the energy storage unit may be connected in series with the direct-current conversion module 102, and when the direct-current conversion module 102 is in a positive polarity working state or negative polarity working state, they jointly provide the third charging power to the charging module 103.

If the energy storage unit is provided in plurality, for example, including energy storage unit 1 1014, energy storage unit 2 1013, ..., energy storage unit n-1 1012, and energy storage unit n 1011, and energy storage unit 1 1014 includes a corresponding switch Kq1, energy storage unit 2 1013 includes a corresponding switch Kq2, ... energy storage unit n-1 1012 includes a corresponding switch Kqn-1, and energy storage unit n 1011 includes a corresponding switch Kqn, if the switch Kq2 is turned on and the other switches in the other energy storage units, that is, the other switches in the fourth switch module, are turned off, the energy storage unit 1 1014 and the energy storage unit 2 1013 are connected in series with the direct-current conversion module 102, to jointly provide the fourth charging power to the charging module 103; or it should be understood that if the switch Kqn is turned on and the switches in the other energy storage units are turned off, energy storage unit 1 1014 to energy storage unit n 1011 are all connected in series with the direct-current conversion module 102, to jointly provide the fourth charging power to the charging module 103.

In the storage and charging integrated apparatus provided in this embodiment of this disclosure, the number of energy storage units connected in series in the storage and charging integrated apparatus is controlled based on the control of the switch state of the fourth switch module. In this way, the number of energy storage units connected can be flexibly determined according to the charging power needs of the to-be-charged device, which improves charging flexibility and expands the range of the fourth charging power output by the storage and charging integrated apparatus.

In some embodiments, as shown in FIGs. 4, 5, and 6, the storage and charging integrated apparatus further includes a control module 107.

The control module is connected to the first switch module 105, the second switch module 106, the third switch module, and the fourth switch module, and is configured to send drive signals to the first switch module 105, the second switch module 106, the third switch module, and the fourth switch module; where the drive signals are used to control on and off states of the first switch module 105, the second switch module 106, the third switch module, and the fourth switch module.

In this embodiment of this disclosure, the control module 107 may also be referred to as a control unit of the storage and charging integrated apparatus 10 and may include devices such as a microcontroller unit (Microcontroller Unit, MCU), a sensor, and a switch circuit, and is configured to monitor, control, and manage the storage and charging integrated apparatus 10.

In this embodiment of this disclosure, the control module 107 may send a drive signal to each of the first switch module 105, the second switch module 106, the third switch module, and the fourth switch module. It should be understood that each drive signal may have a different level state, so that the on or off state of the corresponding switch is controlled based on the level state of the drive signal. For example, when the drive signal is in a high-level state, the corresponding switch may be controlled to be turned on, and when the drive signal is in a low-level state, the corresponding switch may be controlled to be turned off.

In this embodiment of this disclosure, the control module 107 may also be configured to detect and monitor the current and voltage conditions of each module in the storage and charging integrated apparatus 10 and provide timely alerts when abnormalities occur.

It should also be noted that the control module 107 may also be connected to an interactive interface of the storage and charging integrated apparatus 10. Based on an operation selected by a customer on the interactive interface, the control module 107 generates drive signals to control the on and off states of the various switches to charge the to-be-charged device 202 based on a charging mode required by the customer or to feed back electric energy to the power grid.

In the storage and charging integrated apparatus provided in this embodiment of this disclosure, the control module controls the on or off state of the various switches to enable the storage and charging integrated apparatus to achieve different functions. In this way, the convenience and safety of controlling the storage and charging integrated apparatus are improved.

In some embodiments, as shown in FIGs. 4, 5, and 6, the storage and charging integrated apparatus 10 further includes a communication module 108; where the communication module 108 is connected to the control module 107; the control module 107 is configured to obtain a status parameter of the storage and charging integrated apparatus 10 and send the status parameter of the storage and charging integrated apparatus 10 to the communication module 108; and the communication module 108 is configured to receive the status parameter of the storage and charging integrated apparatus 10 and forward the status parameter to a cloud platform.

In this embodiment of this disclosure, the communication module 108 may also be referred to as a wireless communication module with a communication function. It can receive status parameters of various modules in the storage and charging integrated apparatus 10 collected by the control module 107, such as input current, output current, input voltage, and output voltage, and transmit these status parameters to the cloud platform.

In this embodiment of this disclosure, the communication module 108 may further receive a control signal from the cloud platform and send the control signal to the control module 107, so that the control module 107 can generate a drive signal based on the control signal to control the on and off states of the various switches. The control signal may be generated based on an operation selected by the customer on an interactive interface of the cloud platform. For example, the customer may perform batch operation on the storage and charging integrated apparatus 10 by selecting different charging modes or discharging modes to the power grid.

In the storage and charging integrated apparatus provided in this embodiment of this disclosure, the communication module feeds back the status parameter collected by the control module to the cloud platform. In this way, operational data of the storage and charging integrated apparatus can be saved in a timely manner, and an operation status of the storage and charging integrated apparatus can be learned, which improves the operational reliability of the storage and charging integrated apparatus.

In some embodiments, the AC-DC conversion module 104 is a bidirectional AC-DC module, and the direct-current conversion module 102 is a bidirectional DC-DC module.

It should be noted that the AC-DC conversion module 104 may also be an isolated unidirectional AC-DC module or an isolated bidirectional AC-DC module, with an isolation chip inside to isolate the storage and charging integrated apparatus 10 from the power grid side. The specific structure of the AC-DC conversion module 104 is not limited herein.

It should be noted that the direct-current conversion module 102 may also be an isolated unidirectional DC-DC module or an isolated bidirectional DC-DC module, with an isolation chip inside configured to isolate the storage and charging integrated apparatus 10 from the AC-DC conversion module 104, and may work in a positive polarity mode or a negative polarity mode based on the control of the control module. The specific structure of the direct-current conversion module 102 is not limited herein.

In this embodiment of this disclosure, when the AC-DC conversion module 104 is a bidirectional AC-DC module and the direct-current conversion module 102 is a bidirectional DC-DC module, not only can the energy storage module 101 and/or the to-be-charged device 202 be charged, but the electric energy of the energy storage module 101 or the to-be-charged device 202 can also be fed back to the alternating-current power grid 201.

It should also be noted that when an external power source provides direct current, the storage and charging integrated apparatus 10 can be charged through an input interface.

In the storage and charging integrated apparatus provided in this embodiment of this disclosure, the AC-DC conversion module is a bidirectional AC-DC module, and the direct-current conversion module is a bidirectional DC-DC module. In this way, bidirectional electric energy exchange between the storage and charging integrated apparatus and the alternating-current power grid is implemented. The storage and charging integrated apparatus can not only charge the to-be-charged device but also feed back electric energy to the power grid, which helps to shave peaks and fill valleys of the power grid, and improves the stability of the power grid and energy utilization.

In some embodiments, a voltage difference between a first voltage value of the to-be-charged device and a second voltage value of the energy storage module is less than or equal to a first preset value.

It should be noted that in the absence of a transformer, the voltage input from the alternating-current power grid to the storage and charging integrated apparatus 10 is less than or equal to a first preset value, where the first preset value may be determined according to actual conditions and may be 250 volts or 350 volts. Therefore, by controlling the number of energy storage units connected, the output voltage of the energy storage module 101, that is, the second voltage value, may be adjusted, or the value of the voltage output by the direct-current conversion module may be adjusted, so that the voltage difference between this voltage and the charging voltage of the to-be-charged device 202, that is, the first voltage value, is less than or equal to the first preset value.

In the storage and charging integrated apparatus provided in this embodiment of this disclosure, the voltage difference between the first voltage value of the to-be-charged device and the second voltage value of the energy storage module is less than or equal to the first preset value. In this way, high-power output to the to-be-charged device can be implemented, the size of the storage and charging integrated apparatus is reduced, and the charging flexibility is improved.

Still another embodiment of this disclosure provides a charging control method, applied to the storage and charging integrated apparatus in the previous embodiments. As shown in FIG. 1, the storage and charging integrated apparatus 10 may include an energy storage module 101, a direct-current conversion module 102, and a charging module 103.

As shown in FIG. 8, the method may include the following steps.

S301. The direct-current conversion module receives a first charging power input from an external source, and outputs a third charging power through the energy storage module.

S302. Determine a working state of the direct-current conversion module based on a first voltage value of a to-be-charged device and a second voltage value of the energy storage module, and convert the first charging power to a second charging power based on the working state.

The working state includes a positive polarity working state and a negative polarity working state.

S303. Provide the second charging power and the third charging power to the charging module for charging output, and provide a fourth charging power output by the charging module to the to-be-charged device for charging.

In the charging control method provided in this embodiment of this disclosure, the direct-current conversion module converts the first charging power input from the external source and outputs the second charging power based on the working state of the direct-current conversion module. Further, the charging module outputs the second charging power and the third charging power provided by the energy storage module, and provides the fourth charging power output by the charging module to the to-be-charged device for charging. In this way, as the second charging power output by the direct-current conversion module adjusts the third charging power provided by the energy storage module, the fourth charging power output by the charging module has a wider range than the second charging power, and has higher flexibility than the third charging power output by the energy storage module, which achieves voltage adaptation with various devices to be charged, and thus expands the application range of the storage and charging integrated apparatus.

In some embodiments, as shown in FIG. 4, the storage and charging integrated apparatus 10 further includes a first switch module 105. The method may further include:
when the first switch module 105 is in an on state, the direct-current conversion module 102 works in a negative polarity working state, and the second charging power provided by the direct-current conversion module 102 is fed back to the energy storage module 101, enabling the charging module 103 to charge the to-be-charged device 202 based on the third charging power provided by the energy storage module 101; or
when the first switch module 105 is in an off state, and the direct-current conversion module 102 works in a positive polarity working state, enabling the charging module 103 to charge the to-be-charged device 202 based on the second charging power provided by the direct-current conversion module 102 and the third charging power provided by the energy storage module 101.

In this embodiment of this disclosure, the first switch module 105 may be arranged between the energy storage module 101 and the direct-current conversion module 102. Therefore, when the direct-current conversion module 102 works in a negative polarity mode, the first switch module 105 is controlled to be turned on, so that a reverse voltage output by the direct-current conversion module 102 is fed back to the negative electrode terminal of the energy storage module 101, to reduce the voltage output by the energy storage module 101 to the charging module 103; or when the direct-current conversion module 102 works in a positive polarity mode, the first switch module 105 may be in an off state or may be in a continuously on state, so that a positive voltage output by the direct-current conversion module 102 is fed back to the positive electrode terminal of the energy storage module 101, to increase the voltage output by the energy storage module 101 to the charging module 103.

In the charging control method provided in this embodiment of this disclosure, the on or off state of the first switch module is controlled to match the working state of the direct-current conversion module, so that the second charging power provided by the direct-current conversion module and the third charging power provided by the energy storage module are superimposed or offset to charge the to-be-charged device through the charging module, which broadens the application range of the to-be-charged device.

In some embodiments, still referring to FIG. 4, the storage and charging integrated apparatus 10 further includes a second switch module 106. The method further includes: when the first switch module 105 is in an on state and the second switch module 106 is in an off state, charging the energy storage module 101 based on the first charging power provided by the AC-DC conversion module 104, or feeding back electric energy to the alternating-current power grid 201 based on output power of the energy storage module 101.

In this embodiment of this disclosure, the second switch module 106 may be arranged on a path between any two of the energy storage module 101, the AC-DC conversion module 104, and the charging module 103, to control the on and off of the circuit for charging the to-be-charged device 202.

Additionally, when the to-be-charged device 202 is not charging, that is, when the first switch module 105 is on and the second switch module 106 is off, the alternating-current power grid 201 supplies power to the energy storage module 101, or the energy storage module 101 feeds back electric energy to the alternating-current power grid 201.

In the charging control method provided in this embodiment of this disclosure, when the second switch module is on, the energy storage module feeds back electric energy to the alternating-current power grid, or the alternating-current power grid charges the energy storage module through the AC-DC conversion module. In this way, electric energy balance between the energy storage module and the alternating-current power grid can be achieved, which can shave peaks and fill valleys of the alternating-current power grid, thereby improving energy utilization efficiency.

In some embodiments, as shown in FIG. 4, the first switch module includes a first switch K1 and a second switch K2, and the second switch module includes a third switch K3, a fourth switch K4, and a fifth switch K5; and the method further includes:
when the first switch, the second switch, the third switch, the fourth switch, and the fifth switch are all in an on state, the direct-current conversion module works in the negative polarity working state, and the second charging power provided by the direct-current conversion module is fed back to the energy storage module, enabling the charging module to charge the to-be-charged device based on the third charging power provided by the energy storage module; or when the third switch, the fourth switch, and the fifth switch are all in an on state, the first switch and the second switch are both in an off state, and the direct-current conversion module works in the positive polarity working state, enabling the charging module to charge the to-be-charged device based on the second charging power provided by the direct-current conversion module and the third charging power provided by the energy storage module; or when the third switch, the fourth switch, and the fifth switch are all in an off state, the first switch and the second switch are both in an on state, charging the energy storage module based on the first charging power provided by the AC-DC conversion module, or feeding back electric energy to the alternating-current power grid based on the output power of the energy storage module.

In this charging control method provided in this embodiment of this disclosure, by controlling the on and off states of the various switches in the first switch module and the second switch module, it is possible to control whether the storage and charging integrated apparatus charges the to-be-charged device, and control whether the alternating-current power grid charges the energy storage module. In this way, the switches can be turned off when charging is not needed, which reduces energy waste.

In some embodiments, as shown in FIG. 5, the storage and charging integrated apparatus further includes a third switch module, where the third switch module includes a sixth switch K6; and the method further includes:
when the first switch, the third switch, the fourth switch, and the sixth switch are all in an on state and the second switch and the fifth switch are both in an off state, enabling the charging module to charge the to-be-charged device based on the first charging power provided by the AC-DC conversion module, or feeding back electric energy to the alternating current power grid based on output power of the to-be-charged device.

In the charging control method provided in this embodiment of this disclosure, by controlling the on or off states of the various switches in the third switch module, the storage and charging integrated apparatus can charge the to-be-charged device, or to implement a V2G function from the to-be-charged device to the alternating-current power grid. In this way, charging can be performed according to actual situations of the storage and charging integrated apparatus and the to-be-charged device, improving charging flexibility.

In some embodiments, as shown in FIG. 6, the energy storage module includes at least one energy storage unit, and at least some of the at least one energy storage unit each include a fourth switch module; and the method further includes: when the fourth switch module is in an on state, connecting at least one energy storage unit in series in a charging circuit in which the second switch is located to provide the third charging power.

In the charging control method provided in this embodiment of this disclosure, the energy storage module includes a plurality of energy storage units connected in series and/or in parallel. In this way, due to the modularity of the energy storage units, the energy storage units can be freely added or reduced, which facilitates the rapid connection and disconnection of the energy storage units, and improves the flexibility of the fourth charging power output by the storage and charging integrated apparatus.

In another embodiment of this disclosure, FIG. 9 is a schematic diagram of a composition structure of a charging pile according to an embodiment of this disclosure. As shown in FIG. 9, the charging pile 40 includes the storage and charging integrated apparatus 10 in the previous embodiments.

In this embodiment of this disclosure, the charging pile 40 may include the storage and charging integrated apparatus 10 in the previous embodiments, and may further include other devices that interact with a customer, as well as support components and the like, which is not specifically limited herein.

In the charging pile provided in this embodiment of this disclosure, the storage and charging integrated apparatus in the charging pile can output, based on a relatively low power provided by an alternating-current power grid, a relatively high third charging power that meets the needs of supercharging/fast charging. Therefore, no additional transformer is required in the circuit, which reduces the cost of the storage and charging integrated apparatus and reduces the size of the storage and charging integrated apparatus. Moreover, without being restricted by any transformer access point, the storage and charging integrated apparatus can be connected at any position of the alternating-current power grid, which improves the flexibility of the charging pile, and facilitates the fast charging of the to-be-charged device.

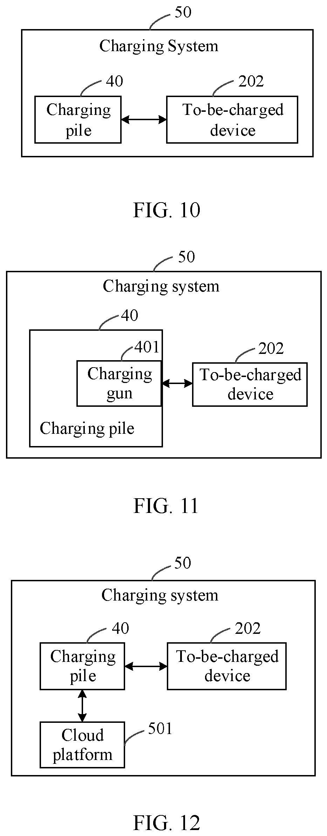

In another embodiment of this disclosure, FIG. 10 is a first schematic diagram of a composition structure of a charging system according to an embodiment of this disclosure. As shown in FIG. 10, the charging system 50 includes a to-be-charged device 202 and the charging pile 40 in the previous embodiment.

As in the previous embodiment, the charging pile 40 includes the storage and charging integrated apparatus, so the storage and charging integrated apparatus charges the to-be-charged device 202.

As shown in FIG. 5, the direct-current conversion module 102, that is, an isolated bidirectional DC/DC, achieves the direct-current positive and negative voltage output. -Ua≤U1-U2≤+Ub, where U1 is a battery voltage of the to-be-charged device 202, such as a car, U2 is a voltage of the energy storage module 101 inside the storage and charging integrated apparatus 10, -Ua is a limit of the negative voltage output by the DC/DC, and +Ub is a limit of the positive voltage output by the DC/DC. This method can adapt to more car battery voltages without considering the car battery voltage range.

When the storage and charging integrated apparatus 10 charges the car, K1, K2, and K6 need to be turned off, and K3, K4, and K5 need to be turned on. When U1-U2≥0 V, the DC/DC works in a positive polarity mode, the DC/DC outputs a positive voltage, and the storage and charging integrated apparatus 10 charges the car. When U1-U2<0 V, if K1 and K2 are turned on, the DC/DC works in a negative polarity mode, the DC/DC outputs a negative voltage, the power of the DC/DC is fed back to a bus of the energy storage module 101 through K1 and K2, and the storage and charging integrated apparatus 10 charges the car.

When no car needs to be charged, and only the alternating-current power grid 201 supplies power to the energy storage module 101 inside the storage and charging integrated apparatus 10, K3, K4, K5, and K6 need to be turned off, and K1 and K2 need to be turned on. The alternating-current power grid charges the energy storage module 101 alone.

When the storage and charging integrated apparatus 10 charges the car, the energy of the energy storage module 101 inside the storage and charging integrated apparatus 10 is insufficient, and the alternating-current power grid charges the car alone, K2 and K5 need to be turned off, and K1, K3, K4, and K6 need to be turned on. The power grid charges the car alone.

During the implementation of the V2G function, the car feeds back electric energy to the power grid. K2 and K5 need to be turned off, and K1, K3, K4, and K6 need to be turned on. The car feeds back electric energy to the power grid.

During the implementation of the function of feeding back electric energy from the energy storage device to the power grid, K3, K4, K5, and K6 need to be turned off, and K1 and K2 need to be turned on. The energy storage module 101 inside the storage and charging integrated apparatus 10 feeds back electric energy to the alternating-current power grid.

In the charging system provided in this embodiment of this disclosure, without the need for an additional transformer configured, the charging pile in the charging system can achieve high-power output to the to-be-charged device based on the low-power input from the alternating-current power grid, which reduces the cost and size of the charging system and increases the charging speed.

In some embodiments, FIG. 11 is a second schematic diagram of a composition structure of a charging system according to an embodiment of this disclosure. As shown in FIG. 11, the charging module includes a charging gun 401, and an output terminal of the charging gun 401 is connected to the to-be-charged device 202;

The storage and charging integrated apparatus 10 is configured to charge the to-be-charged device 202 through the charging gun 401 based on a second charging power provided by the direct-current conversion module and a third charging power provided by the energy storage module.

It should be noted that in this embodiment of this disclosure, the charging module and/or the charging gun may be arranged inside the storage and charging integrated apparatus or outside the storage and charging integrated apparatus, and connected to the storage and charging integrated apparatus when the to-be-charged device 202 needs charging, which is not specifically limited herein.

In the charging system provided in this embodiment of this disclosure, the to-be-charged device is charged through the charging gun, which improves the stability of the charging process.

In some embodiments, FIG. 12 is a third schematic diagram of a composition structure of a charging system according to an embodiment of this disclosure. As shown in FIG. 12, the charging system further includes a cloud platform 501, where the cloud platform 501 is connected to the storage and charging integrated apparatus; and the cloud platform 501 is configured to receive a status parameter of the storage and charging integrated apparatus.

In this embodiment of this disclosure, the cloud platform 501 may be arranged on a cloud server to obtain the status parameter collected by the control module in the storage and charging integrated apparatus and display the status parameter to an operator.

In the charging system provided in this embodiment of this disclosure, the status parameter of the storage and charging integrated apparatus is received through the cloud platform, which facilitates real-time monitoring of the status of the storage and charging integrated apparatus and timely handling of abnormalities when they occur.

It should be understood that those skilled in the art should understand that this disclosure can be implemented in the form of hardware embodiments, software embodiments, or embodiments combining software and hardware. Moreover, this disclosure may use a form of a computer program product that is implemented on one or more computer-usable storage media (including but not limited to a disk memory and an optical memory) that include computer-usable program code.

It should be understood that "one embodiment" or "an embodiment" mentioned throughout the specification means that specified features, structures, or characteristics related to the embodiment are included in at least one embodiment of this disclosure. Therefore, "in one embodiment" or "in an embodiment" appearing throughout the specification does not necessarily refer to a same embodiment. In addition, these specified features, structures, or characteristics may be combined in one or more embodiments in any appropriate manner. It should be understood that, in the embodiments of this disclosure, sequence numbers of the foregoing steps/processes do not mean execution sequences. The execution sequences of the steps/processes should be determined according to functions and internal logic of the processes, and should not be construed as any limitation on the implementation processes of the embodiments of this disclosure. The serial numbers of the embodiments of this disclosure mentioned above are merely for descriptive purposes and do not represent the quality of the embodiments.

It should be noted the term "include", "comprise", or any of their variants in this disclosure are intended to cover a non-exclusive inclusion, so that a process, a method, an article, or a device that includes a list of elements not only includes those elements but also includes other elements that are not expressly listed, or further includes elements inherent to such process, method, article, or device. Without more constraints, an element preceded by "includes a ..." does not preclude the presence of other identical elements in the process, method, article, or apparatus that includes the element.

In the several embodiments provided in this disclosure, it should be understood that the disclosed system, device, and method may be implemented in other manners. The device embodiment described above is merely an example. For example, the unit division is merely logical function division, and there may be another division manner in actual implementation. For example, a plurality of units or components may be combined or may be integrated into another system, or some characteristics may be ignored or not performed. In addition, the displayed or discussed mutual couplings or direct couplings or communication connections between the various components may be implemented through some interfaces. The indirect couplings or communication connections between the devices or units may be implemented in electrical, mechanical, or other forms.

The units described as separate parts may or may not be physically separate, and parts displayed as units may or may not be physical units, may be located in one position, or may be distributed on a plurality of network elements, and some or all of the units may be selected according to actual needs to achieve the objectives of the embodiments. In addition, functional units in the embodiments of this disclosure may be integrated into one processing unit, or each of the units may be separately served as a unit, or two or more units are integrated into one unit. The integrated unit may be implemented in the form of hardware, or may be implemented in the form of hardware plus software functional units.

The foregoing descriptions are merely optional embodiments of this disclosure, but are not intended to limit the protection scope of this disclosure. Any modification, equivalent replacement, or improvement made without departing from the spirit and principle of this disclosure should fall within the protection scope of this disclosure.

## Claims

1. A storage and charging integrated apparatus, wherein the storage and charging integrated apparatus comprises an energy storage module, a direct-current conversion module, and a charging module; wherein
an input terminal of the direct-current conversion module is configured to receive a first charging power input from an external source;
a first output terminal of the direct-current conversion module is connected to a first terminal of the charging module, a second output terminal of the direct-current conversion module is connected to a first terminal of the energy storage module, and a second terminal of the charging module is connected to a second terminal of the energy storage module; and
the charging module is connected in series with the direct-current conversion module and the energy storage module and is configured to output or receive electric energy to or from a to-be-charged device.

2. The storage and charging integrated apparatus according to claim 1, wherein
a positive electrode terminal of the energy storage module is connected to a negative electrode terminal of the direct-current conversion module, and a negative electrode terminal of the energy storage module is connected to a negative electrode terminal of the charging module; or
a negative electrode terminal of the energy storage module is connected to a positive electrode terminal of the direct-current conversion module, and a positive electrode terminal of the energy storage module is connected to a positive electrode terminal of the charging module.

3. The storage and charging integrated apparatus according to claim 1, wherein the storage and charging integrated apparatus further comprises an AC-DC conversion module; wherein
an input terminal of the AC-DC conversion module is connected to an alternating-current power grid;
the first terminal of the energy storage module is connected to a first output terminal of the AC-DC conversion module, a first input terminal of the direct-current conversion module, and the second output terminal of the direct-current conversion module, and the second terminal of the energy storage module is connected to a second output terminal of the AC-DC conversion module and a second input terminal of the direct-current conversion module; and
the AC-DC conversion module is configured to provide the first charging power to the direct-current conversion module.

4. The storage and charging integrated apparatus according to claim 3, wherein the storage and charging integrated apparatus further comprises a first switch module and a second switch module, wherein the first switch module comprises a first switch and a second switch, and the second switch module comprises a third switch, a fourth switch, and a fifth switch; and
the first switch is connected in series between the second input terminal of the direct-current conversion module and the second terminal of the energy storage module, the second switch is connected in series between the first input terminal of the direct-current conversion module and the first terminal of the energy storage module, the third switch is connected in series between the first output terminal of the direct-current conversion module and a first input terminal of the charging module, the fourth switch is connected in series between the second terminal of the energy storage module and a second input terminal of the charging module, and the fifth switch is connected in series between the second output terminal of the direct-current conversion module and the first terminal of the energy storage module.

5. The storage and charging integrated apparatus according to claim 4, wherein the storage and charging integrated apparatus further comprises a third switch module, wherein the third switch module comprises a sixth switch; and
one terminal of the sixth switch is connected to the first output terminal of the AC-DC conversion module, and another terminal of the sixth switch is connected to one terminal of the third switch.

6. The storage and charging integrated apparatus according to any one of claims 1 to 5, wherein the energy storage module comprises at least one energy storage unit; wherein
the at least one energy storage unit is connected in series and/or in parallel between the first terminal of the energy storage module and the second terminal of the energy storage module to provide a third charging power.

7. The storage and charging integrated apparatus according to claim 6, wherein each of the energy storage unit comprises an energy storage battery, and each of the energy storage unit is configured to provide a fifth charging power based on electric energy of the energy storage battery; wherein the fifth charging power is less than or equal to the third charging power.

8. The storage and charging integrated apparatus according to claim 7, wherein at least some of the at least one energy storage unit each comprise a fourth switch module, wherein the fourth switch module is connected in series between the first terminal of the corresponding energy storage unit and the second output terminal of the AC-DC conversion module.

9. The storage and charging integrated apparatus according to any one of claims 1 to 8, wherein the storage and charging integrated apparatus further comprises a control module; wherein
the control module is connected to the first switch module, the second switch module, the third switch module, and the fourth switch module, and is configured to send drive signals to the first switch module, the second switch module, the third switch module, and the fourth switch module; wherein the drive signals are used to control on and off states of the first switch module, the second switch module, the third switch module, and the fourth switch module.

10. The storage and charging integrated apparatus according to any one of claims 1 to 9, wherein the storage and charging integrated apparatus further comprises a communication module; wherein the communication module is connected to the control module; and
the control module is configured to obtain a status parameter of the storage and charging integrated apparatus and send the status parameter to the communication module; and
the communication module is configured to receive the status parameter of the storage and charging integrated apparatus and forward the status parameter to a cloud platform.

11. The storage and charging integrated apparatus according to any one of claims 1 to 10, wherein the AC-DC conversion module is a bidirectional AC-DC module, and the direct-current conversion module is a bidirectional DC-DC module.

12. The storage and charging integrated apparatus according to any one of claims 1 to 10, wherein a voltage difference between a first voltage value of the to-be-charged device and a second voltage value of the energy storage module is less than or equal to a first preset value.

13. A charging control method, applied to a storage and charging integrated apparatus, wherein the storage and charging integrated apparatus comprises an energy storage module, a direct-current conversion module, and a charging module; and the method comprises:
receiving, by the direct-current conversion module, a first charging power input from an external source, and outputting a third charging power through the energy storage module;
determining a working state of the direct-current conversion module based on a first voltage value of a to-be-charged device and a second voltage value of the energy storage module, and converting the first charging power to a second charging power based on the working state; wherein the working state comprises a positive polarity working state and a negative polarity working state; and
providing the second charging power and the third charging power to the charging module for charging output, and providing a fourth charging power output by the charging module to the to-be-charged device for charging.

14. The charging control method according to claim 13, wherein the storage and charging integrated apparatus further comprises a first switch module; and the method further comprises:
when the first switch module is in an on state, the direct-current conversion module works in the negative polarity state, and the second charging power provided by the direct-current conversion module is fed back to the energy storage module, enabling the charging module to charge the to-be-charged device based on the third charging power provided by the energy storage module; or
when the first switch module is in an off state and the direct-current conversion module works in the positive polarity state, enabling the charging module to charge the to-be-charged device based on the second charging power provided by the direct-current conversion module and the third charging power provided by the energy storage module.

15. The charging control method according to claim 14, wherein the storage and charging integrated apparatus further comprises a second switch module; and the method further comprises:
when the first switch module is in an on state and the second switch module is in an off state, charging the energy storage module based on the first charging power provided by the AC-DC conversion module, or feeding back electric energy to an alternating-current power grid based on output power of the energy storage module.

16. The charging control method according to claim 15, wherein the first switch module comprises a first switch and a second switch, and the second switch module comprises a third switch, a fourth switch, and a fifth switch; and the method further comprises:
when the first switch, the second switch, the third switch, the fourth switch, and the fifth switch are all in an on state, the direct-current conversion module works in the negative polarity working state, and the second charging power provided by the direct-current conversion module is fed back to the energy storage module, enabling the charging module to charge the to-be-charged device based on the third charging power provided by the energy storage module; or when the third switch, the fourth switch, and the fifth switch are all in an on state, the first switch and the second switch are both in an off state, and the direct-current conversion module works in the positive polarity working state, enabling the charging module to charge the to-be-charged device based on the second charging power provided by the direct-current conversion module and the third charging power provided by the energy storage module; or when the third switch, the fourth switch, and the fifth switch are all in an off state, the first switch and the second switch are both in an on state, charging the energy storage module based on the first charging power provided by the AC-DC conversion module, or feeding back electric energy to the alternating-current power grid based on the output power of the energy storage module.

17. The charging control method according to any one of claims 13 to 16, wherein the storage and charging integrated apparatus further comprises a third switch module, and the third switch module comprises a sixth switch; and the method further comprises:
when the first switch, the third switch, the fourth switch, and the sixth switch are all in an on state and the second switch and the fifth switch are both in an off state, enabling the charging module to charge the to-be-charged device based on the first charging power provided by the AC-DC conversion module, or feeding back electric energy to the alternating-current power grid based on its output power of the to-be-charged device.

18. The charging control method according to any one of claims 13 to 17, wherein the energy storage module comprises at least one energy storage unit, and at least some of the at least one energy storage unit each comprises a fourth switch module; and the method further comprises:
when the fourth switch module is in an on state, connecting at least one energy storage unit in series in a charging circuit in which the second switch is located to provide the third charging power.

19. A charging pile, wherein the charging pile comprises the storage and charging integrated apparatus according to any one of claims 1 to 12.

20. A charging system, wherein the charging system comprises a to-be-charged device and the charging pile according to claim 19.

21. The charging system according to claim 20, wherein the charging module comprises a charging gun, wherein an output terminal of the charging gun is connected to the to-be-charged device; and
the storage and charging integrated apparatus is configured to charge the to-be-charged device through the charging gun based on a second charging power provided by a direct-current conversion module and a third charging power provided by an energy storage module.

22. The charging system according to claim 20, wherein the charging system further comprises a cloud platform, wherein the cloud platform is connected to the storage and charging integrated apparatus; and
the cloud platform is configured to receive a status parameter of the storage and charging integrated apparatus.
